# EUROPEAN PATENT SPECIFICATION

(11) **EP 3 783 984 B1**
(45) Date of publication and mention of the grant of the patent: **14.02.2024**
(21) Application number: 19800822.9
(22) Date of filing: 25.04.2019
(51) Int. Cl.: H04W 72/0446, H04W 72/56

(54) **RESOURCE ALLOCATION METHOD AND COMMUNICATIONS DEVICE**
RESSOURCENZUTEILUNGSVERFAHREN UND KOMMUNIKATIONSVORRICHTUNG
PROCÉDÉ D'ATTRIBUTION DE RESSOURCES ET DISPOSITIF DE COMMUNICATION

(30) Priority: 10.05.2018 CN 201810445337
(43) Date of publication of application: 24.02.2021
(73) Proprietor: Huawei Technologies Co., Ltd., Longgang District Shenzhen, Guangdong 518129 (CN)
(72) Inventor: XU, Bin, Shenzhen, Guangdong 518129 (CN); CAO, Zhenzhen, Shenzhen, Guangdong 518129 (CN); YAO, Chuting, Shenzhen, Guangdong 518129 (CN); KUANG, Yiru, Shenzhen, Guangdong 518129 (CN)
(74) Representative: Grünecker Patent- und Rechtsanwälte PartG mbB
(86) International application number: PCT/CN2019/084211
(87) International publication number: WO 2019/214439

(56) References cited:
- CN-A- 102 123 512
- CN-A- 102 149 206
- CN-A- 102 348 292
- US-A1- 2017 374 579
- TSG SA WG2: "[DRAFT] LS on URLLC Services", 3GPP DRAFT; S2-183260-URLLCSERVICES-V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sanya, P.R. China; 20180416 - 20180420 10 April 2018 (2018-04-10), XP051437621, Retrieved from the Internet: URL:http://www.3gpp.org/ftp/tsg%5Fsa/WG2%5 FArch/TSGS2%5F127%5FSanya/Docs/ [retrieved on 2018-04-10]
- NOKIA ET AL: "On delivering Delay critical service consistently end to end", 3GPP DRAFT; S2-183400 DISCUSSION ON MDBV AND MFBR ENFORCEMENT V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. SA WG2, no. Sanya, China; 9 April 2018 (2018-04-09), XP051437453, Retrieved from the Internet: URL:http://www.3gpp.org/ftp/tsg%5Fsa/WG2%5 FArch/TSGS2%5F127%5FSanya/Docs/ [retrieved on 2018-04-09]

## Description

### TECHNICAL FIELD

This application relates to the communications field, and more specifically, to a resource allocation method and a communications device.

### BACKGROUND

In a 5th generation (5 generation, 5G) new radio (new radio, NR) technology, various types of network deployment and application types are supported. This requires higher-rate experience and a higher-bandwidth access capability, lower-latency and higher-reliability information exchange, larger-scale and lower-cost access and management of machine-type communications devices, and the like. To meet the foregoing requirements, 5G defines a network architecture that is based on a quality of service flow (Quality of Service flow, QoS flow). Technical draft TSG SA WG2: "[DRAFT] LS on URLLC Services", S2-183260, 10 April 2018, relates to LS on URLLC Services. Technical paper NOKIA ET AL: "On delivering Delay critical service consistently end to end", 3GPP draft S2-183400, 9 April 2018, relates to delay critical GBR service in the 5GS. Data packets of a same QoS flow have a same transmission feature, for example, a same packet loss rate or a same packet delay. In addition, one or more QoS flows may be transmitted on a same logical channel. For a plurality of logical channels of a terminal device, there may be QoS flows that are on the plurality of logical channels and that are delay critical guaranteed bit rate QoS flows (Delay Critical Guaranteed Bit Rate QoS flow). How to enable data transmitted on a logical channel to meet a delay requirement of a service transmitted on the logical channel becomes an urgent problem to be resolved currently.

### SUMMARY

This application provides a resource allocation method and a communications device, to optimize resource configuration and further improve communication. The present invention is disclosed according to the independent claims. The dependent claims recite advantageous embodiments of the invention.

According to the invention, a resource allocation method is provided, including: A communications device receives logical channel configuration information sent by a network device. The logical channel configuration information includes a time duration and a volume of data transmitted within the time duration, and the data transmission volume is a volume of data that can be transmitted on a logical channel. The communications device determines a first logical channel based on a first condition. The first condition is: for a logical channel, a sum of a size of a to-be-transmitted data packet of the communications device and a volume of data that is already transmitted within the time duration before a moment at which the to-be-transmitted data packet is transmitted is less than or equal to the volume of the data. The communications device allocates, to the first logical channel based on the size of the to-be-transmitted data packet, a resource used for transmitting the to-be-transmitted data packet.

According to the resource allocation method, it is ensured that a volume of data transmitted on the logical channel of the communications device does not exceed a limit of the volume of the data that istransmitted on the logical channel within the time duration. In this way, each logical channel of the communications device meets a limit on a volume of data that can be transmitted on the logical channel, so that a transmission delay requirement of each logical channel is met, thereby improving efficiency of transmitting a data packet by the communications device, and improving user experience.

According to the invention, the method further includes: The communications device determines a second logical channel set based on a second condition. The second logical channel set includes at least one logical channel. The second condition is: for a logical channel, the volume of the data that is already transmitted within the time duration before the moment at which the to-be-transmitted data packet is transmitted is less than or equal to the volume of the data. That the communications device determines a first logical channel based on a first condition includes: The communications device determines the first logical channel from the second logical channel set based on the first condition. In this implementation, a range in which the communications device determines the first logical channel is narrowed. This improves efficiency and accuracy of determining the first logical channel by the communications device, and improves communication efficiency.

In a possible implementation, the time duration is a packet delay budget PDB corresponding to a service transmitted on the logical channel; or the volume of the data is a maximum data burst volume MDBV within the PDB. In this implementation, accuracy of determining the first logical channel by the communications device based on the first condition or based on the first condition and the second condition can be ensured, and that a volume of data transmitted on each logical channel of the communications device within the PDB does not exceed the MDBV can be ensured. This improves communication efficiency and user experience.

### BRIEF DESCRIPTION OF DRAWINGS

FIG. 1 is a schematic diagram of a typical communications system architecture applicable to a communication method according to this application;
FIG. 2 is a schematic diagram of a token bucket mechanism;
FIG. 3 is a schematic flowchart of a resource allocation method according to an embodiment of this application;
FIG. 4 is a schematic flowchart of a resource allocation method according to another embodiment of this application;
FIG. 5 is a schematic flowchart of a resource allocation method according to an embodiment of this application;
FIG. 6 is a schematic flowchart of a resource allocation method according to another embodiment of this application;
FIG. 7 is a schematic structural diagram of a communications device according to an embodiment of this application;
FIG. 8 is another schematic structural diagram of a communications device according to an embodiment of this application;
FIG. 9 is another schematic structural diagram of a communications device according to an embodiment of this application;
FIG. 10 is another schematic structural diagram of a communications device according to an embodiment of this application;
FIG. 11 is another schematic structural diagram of a communications device according to an embodiment of this application;
FIG. 12 is another schematic structural diagram of a communications device according to an embodiment of this application;
FIG. 13 is another schematic structural diagram of a communications device according to an embodiment of this application;
FIG. 14 is another schematic structural diagram of a communications device according to an embodiment of this application;
FIG. 15 is another schematic structural diagram of a communications device according to an embodiment of this application;
FIG. 16 is another schematic structural diagram of a communications device according to an embodiment of this application;
FIG. 17 is another schematic structural diagram of a communications device according to an embodiment of this application;
FIG. 18 is another schematic structural diagram of a communications device according to an embodiment of this application;
FIG. 19 is another schematic structural diagram of a communications device according to an embodiment of this application;
FIG. 20 is another schematic structural diagram of a communications device according to an embodiment of this application;
FIG. 21 is another schematic structural diagram of a communications device according to an embodiment of this application; and
FIG. 22 is another schematic structural diagram of a communications device according to an embodiment of this application.

### DESCRIPTION OF EMBODIMENTS

The following describes technical solutions of this application with reference to the accompanying drawings.

The technical solutions of the embodiments of this application may be applied to various communications systems, such as a global system for mobile communications (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD), a universal mobile telecommunications system (Universal Mobile Telecommunication System, UMTS), a worldwide interoperability for microwave access (Worldwide Interoperability for Microwave Access, WiMAX) communications system, a 5G system, or NR.

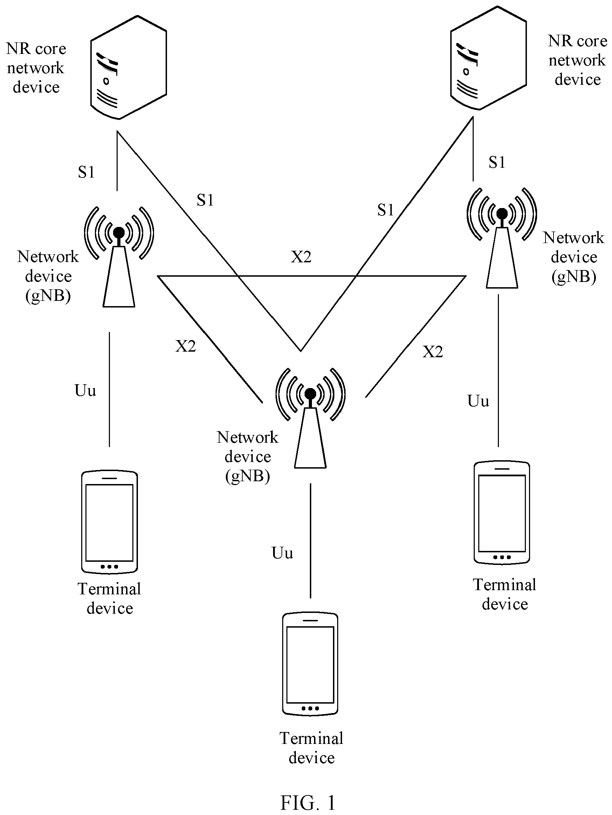

FIG. 1 is a schematic block diagram of a wireless communications system architecture applicable to a resource allocation method according to this application. As shown in FIG. 1, a terminal device may establish an air interface connection to a network device (for example, a next generation NodeB (NR nodeB, gNB)) by using a Uu interface, to transmit signaling, data, or the like, and then the terminal device is connected to a data network by using the gNB. The network device is mainly configured to implement functions such as a radio physical layer function, resource scheduling and radio resource management, radio access control, and mobility management. Data may be exchanged between gNBs through an X2 interface. The gNB is connected to an NR core network by using an S1 interface. The NR core network is mainly used for device registration, security authentication, mobility management, and location management of the terminal device, establishment of a channel to the terminal device, forwarding, on the channel, a data packet between the terminal device and an external data network, and the like. It should be noted that FIG. 1 is merely an example architectural diagram. This is not limited in the embodiments of this application.

The terminal device may be user equipment (user equipment, UE), for example, a mobile phone or a computer, or may be a cellular phone, a cordless phone, a session initiation protocol (session initiation protocol, SIP) phone, a smartphone, a wireless local loop (wireless local loop, WLL) station, a personal digital assistant (personal digital assistant, PDA), a computer, a laptop computer, a handheld communications device, a handheld computing device, a satellite wireless device, a wireless modem card, a set top box (set top box, STB), customer premise equipment (customer premise equipment, CPE), and/or another device used for communication in a wireless system, a terminal device in a 5G network, a terminal device in a future evolved public land mobile network (Public Land Mobile Network, PLMN), or the like. This is not limited in the embodiments of this application.

The network device may be a device configured to communicate with the terminal device, or may be referred to as an access network device. For example, the network device may be a base transceiver station (Base Transceiver Station, BTS) in a global system for mobile communications (Global System of Mobile communication, GSM) system or code division multiple access (Code Division Multiple Access, CDMA), or may be a NodeB in a wideband code division multiple access (Wideband Code Division Multiple Access, WCDMA) system, or may be an evolved NodeB (Evolutional NodeB, eNB or eNodeB) in an LTE system or a next generation NodeB (NR nodeB, gNB), or may be a radio controller in a cloud radio access network (Cloud Radio Access Network, CRAN) scenario, or the network device may be a relay station, an access point, a vehicle-mounted device, a wearable device, a network device in a future 5G network, or a network device in a future evolved PLMN network, or may be a network including a plurality of 5G-AN/5G radio access nodes. The 5G-AN/5G-radio access node may be an access point (access point, AP), a gNB, a gNB in which a centralized unit (central unit, CU), a distributed unit (distributed unit, DU) are in a separated form, a transmission reception point (transmission receive point, TRP), a transmission point (transmission point, TP), another access node, or the like. This is not limited in the embodiments of this application.

A core network device may include function units such as an access and mobility management function (access and mobility function, AMF), a session management function (session management function, SMF), a policy control function (policy control function, PCF), and a user plane function (user plane function, UPF). These function units may work independently, or may be combined to implement specific control functions. When the network is an LTE network, for a terminal device, refer to related descriptions of the terminal device in FIG. 1. The access network device may be a NodeB, an evolved NodeB (evolution nodeB, eNB), a TRP, a TP, an AP, or another access unit. The core network device may include management devices such as a mobility management entity (mobility management entity, MME) and a policy and charging rules function (policy and charging rules function, PCRF), gateway devices such as a serving gateway (serving gateway, SGW), a packet data network gateway (packet data network gateway, PGW), and a local gateway (local gateway, LGW), and the like. This is not limited in the embodiments of this application.

5G defines a QoS flow-based network architecture. Data packets of a same QoS flow have a same transmission feature, for example, a same packet loss rate or a same packet delay. Services with different QoS requirements are transmitted in different QoS flows, and each QoS flow has a corresponding QoS feature parameter to ensure that a transmission requirement of a service can be met. Currently, there are six QoS features in 5G:
1. Resource type (Resource Type) QoS flows are classified into delay critical guaranteed bit rate (Delay Critical Guaranteed Bit Rate QoS flow) QoS flows and non-guaranteed bit rate QoS flows (non-Guaranteed Bit Rate QoS flow).
2. Priority level (Priority level)
3. Packet delay budget (Packet Delay Budget, PDB), which indicates a maximum transmission delay allowed for a data packet
4. Packet error rate (Packet Error Rate)
5. Averaging time window (Averaging window)
6. Maximum data burst volume (Maximum Data Burst Volume, MDBV), which is set for a delay critical guaranteed bit rate QoS flow delay critical GBR QoS flow, and indicates a maximum data volume that is of a service and that is required on a radio access network (Radio Access Network, RAN) side within a PDB on the RAN side

For example, when there are a plurality of delay critical guaranteed bit rate QoS flows for same UE, because delays of data packets in the QoS flows need to be 100% ensured, a volume of transmitted data in each QoS flow cannot exceed the MDBV within a specified PDB. Otherwise, a resource may be preempted from another QoS flow. Consequently, some data packets of other QoS flows are detained because the data packets cannot obtain a transmission resource, and delays of the other QoS flows cannot be 100% ensured.

One or more QoS flows may be transmitted on a same logical channel. For a plurality of logical channels of a terminal device, all QoS flows on the plurality of logical channels may be delay critical guaranteed bit rate QoS flows. In this case, data transmitted on each logical channel needs to strictly meet a delay requirement, and data transmission needs to be completed within a specified requirement delay (for example, a PDB). In other words, a volume of data transmitted on each logical channel within a specified delay time cannot be greater than a threshold. The threshold may be a sum of MDBVs of delay critical guaranteed bit rate QoS flows on the logical channel. Otherwise, the logical channel may preempt a resource from another logical channel. Consequently, a delay requirement cannot be met during data transmission on the another logical channel. Because it cannot be ensured that the transmission delay requirement is met on the another logical channel, user experience is severely affected.

Currently, when a medium access control (Medium Access Control, MAC) layer of the terminal device allocates a resource for data transmission to each logical channel, there are two rounds of logical channel prioritization (Logical Channel Prioritization, LCP) allocation processes.

First, a token bucket (token bucket) algorithm is used in the first round to ensure that a minimum transmission requirement of a service on each logical channel is met. To be specific, when allocating a resource to data on each logical channel, the terminal device first needs to ensure that the resource meets a minimum resource requirement of each logical channel, namely, a prioritized bit rate (Prioritized Bit Rate, PBR).

Then, in the second round, remaining resources in the first round are allocated to logical channels in descending order of priorities strictly based on logical channel priorities. Low-priority logical channels can obtain the resource only when data on all high-priority logical channels is sent and resources configured by a network device for the terminal device are not exhausted.

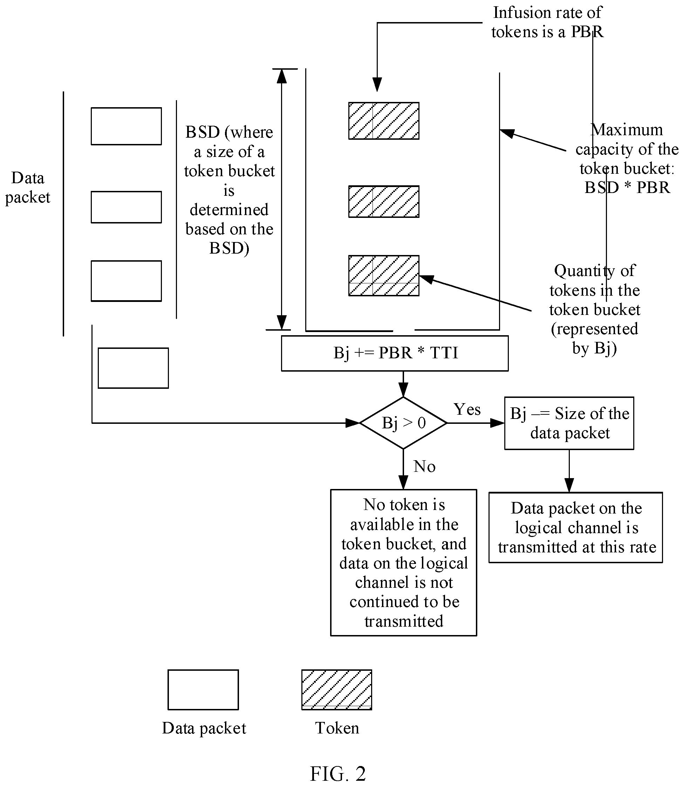

FIG. 2 shows a schematic diagram of a token bucket algorithm mechanism. Each logical channel corresponds to one token bucket. A token bucket with a fixed capacity may continuously add tokens to the token bucket at a constant rate (for example, a PBR) by using a transmission time interval (Transmission Time Interval, TTI) as an adding periodicity. Bucket size duration (Bucket Size Duration, BSD) determines a size of the token bucket. If tokens are not consumed or a consumed rate is less than a generation rate, a quantity of tokens increases until the token bucket is full. A subsequently generated token overflows the token bucket. Finally, a maximum quantity of tokens that can be stored in the token bucket will never exceed the size of the bucket (a capacity of the token bucket). A data packet transmitted to the token bucket consumes tokens. A quantity of tokens consumed by each data packet is the same as a size of the data packet. Data packets of different sizes consume different quantities of tokens. The terminal device maintains a variable Bj for each logical channel j. The variable indicates a quantity of currently available tokens in the token bucket. Initial Bj that is in the token bucket and that corresponds to each logical channel is 0. On the one hand, the quantity of tokens in the token bucket increases at a PBR rate. On the other hand, each time the terminal device transmits a data packet on the logical channel, a size of the corresponding data packet is subtracted from a quantity Bj of tokens, and remaining Bj is used as new Bj to determine whether the logical channel can continue to transmit data. A superior limit of a quantity of tokens that can be added is the token bucket size duration BSD multiplied by the PBR. That is, the capacity of the token bucket is the BSD multiplied by the PBR. After the capacity of the token bucket reaches a maximum value, the quantity of tokens does not increase.

In the current technology, to reduce data packet segmentation, a quantity of tokens may be reduced to a negative number after a transmission. For example, it is assumed that a quantity of tokens in a token bucket is 50 KB. However, a data packet of 60 KB needs to be transmitted. According to the token bucket algorithm, because Bj is a positive value, the data packet is allowed to be transmitted. After the transmission is complete, the quantity of tokens is -10 KB. In this case, no data can be transmitted until the quantity of tokens in the token bucket is greater than 0 KB.

An example in which a specified delay time is a PDB and a threshold of a volume of data transmitted within the PDB is an MDBV is used for description. In the current technology, a case in which a token value is allowed to be a negative value brings a great challenge of limiting the MDBV Because the token value is allowed to be negative, data is transmitted each time the tokens increase and a value of tokens in the token bucket becomes a positive value. It is assumed that the MDBV is 100 KB and a size of a data packet is 150 KB. Even if a token value is 1 KB, a transmission condition is met. However, once the data packet is transmitted, the token value exceeds a limit of the MDBV In other words, a resource of 149 KB needs to be preempted from another logical channel to meet transmission of the data packet. In this case, resources of the another logical channel are limited because resources allocated by the network device to the terminal device are limited, and data transmission on the another logical channel is affected. Consequently, data packets of services on the another logical channel cannot meet a delay requirement.

In addition, in the current technology, tokens continuously increase at an even rate. Although there is a limitation on a maximum quantity of tokens, this also brings a challenge of limiting the MDBV It is assumed that no data is transmitted on a logical channel of the terminal device for a period of time. After a period of time of accumulation, a quantity Bj is already greatly increased (a maximum value of the quantity Bj is a capacity of a token bucket). In this case, if data arrives, because there are a large quantity of tokens, all data may be transmitted at a time. In addition, after the tokens are used up, because tokens still continuously increase, data may be continuously transmitted. Consequently, a volume of data transmitted on the logical channel easily exceeds the limit of the MDBV within the PDB. This also causes a phenomenon that the logical channel needs to preempt a resource from another logical channel. Consequently, resources of the another logical channel are limited, data transmission on the another logical channel is affected, and a service on the another logical channel cannot meet a delay requirement.

Therefore, how to ensure that a delay requirement of a logical channel of the terminal device is met when the logical channel transmits data becomes an urgent problem to be resolved currently.

Based on the foregoing problem, this application provides a resource allocation method, so that a delay requirement for transmitting a data packet on a logical channel can be met when a terminal device allocates a resource to the logical channel. This ensures that a volume of data transmitted on the logical channel of the terminal device does not exceed a limit of a volume of data that can be transmitted on the logical channel when the delay requirement is met, thereby improving communication quality and efficiency, and improving user experience.

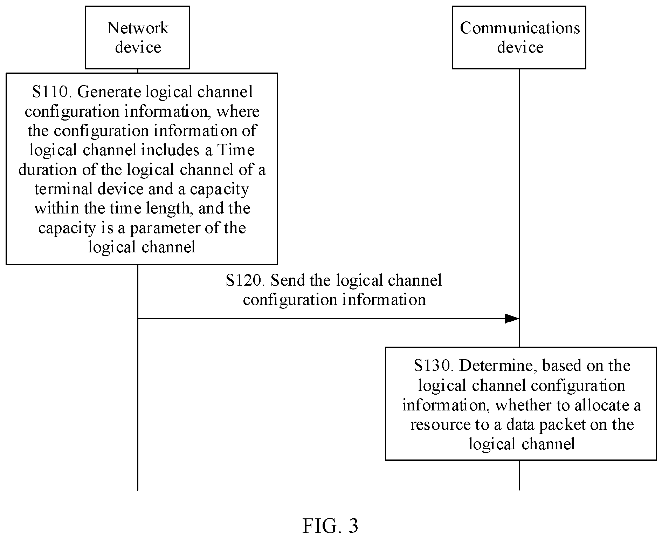

The following describes in detail a resource allocation method provided in this application with reference to FIG. 3. FIG. 3 is a schematic flowchart of a communication method 100 according to an embodiment of this application. The method 100 may be applied to the scenario shown in FIG. 1, or certainly may be applied to another communication scenario. This is not limited in this embodiment of this application.

As shown in FIG. 3, the method 100 includes the following steps.

S110. A network device generates logical channel configuration information, where the logical channel configuration information includes a time duration parameter of a logical channel of a communications device and a capacity within the time duration, and the capacity is a parameter of the logical channel.

S120. The network device sends the logical channel configuration information to the communications device, and correspondingly, the communications device receives the logical channel configuration information.

S130. The communications device determines, based on the logical channel configuration information, whether to allocate a resource to a data packet on the logical channel.

According to the resource allocation method provided in this application, when needing to allocate a transmission resource to the data packet on the logical channel, the communications device may determine, based on the time duration of the logical channel and a capacity of data that can be transmitted on the logical channel within the time duration that are in the logical channel configuration information sent by the network device, whether to allocate the resource to the data packet on the logical channel. This can avoid a case in which a resource needs to be preempted from another logical channel because a size of a data packet transmitted on the logical channel exceeds a maximum volume of data that can be transmitted on the logical channel within the time duration, ensure that a volume of data transmitted on the logical channel of the communications device does not exceed a limit of a volume of data that can be transmitted on the logical channel when a delay requirement is met, and ensure a delay requirement and the like for data transmission on another logical channel, thereby improving communication efficiency and user experience.

When the communications device (for example, a terminal device) needs to allocate the transmission resource to the data packet on the logical channel, the communications device may obtain the logical channel configuration information sent by the network device. The logical channel configuration information includes the time duration and the capacity within the time duration. The capacity is the parameter of the logical channel. The time duration of the logical channel may indicate a delay requirement that needs to be met when service data is transmitted on the logical channel, and the capacity within the time duration indicates a maximum volume of data that can be transmitted on the logical channel within a time specified by the delay requirement. For example, if the time duration is 20 ms, it indicates that the delay requirement for transmitting the data packet on the logical channel cannot exceed 20 ms. The capacity within the time duration may be the maximum volume of the data that can be transmitted on the logical channel when the delay requirement is met, that is, within 20 ms. If a volume of data that can be transmitted on the logical channel within the time duration is less than or equal to the maximum volume of data, it indicates that the logical channel can meet a transmission delay requirement. If a volume of data transmitted on the logical channel within the time duration is greater than the maximum volume of data, it indicates that the logical channel cannot meet a transmission delay requirement. The communications device determines, based on the time duration of the logical channel and the capacity within the time duration and with reference to the size of the data packet that needs to be transmitted, whether to allocate the resource to the data packet on the logical channel. For example, the size of the data packet exceeds the capacity of the logical channel. If the data packet is transmitted on the logical channel, some additional resources need to be preempted from another logical channel to ensure that a transmission delay requirement of the data packet is met. As a result, resources of the another logical channel are limited, affecting data packet transmission on the another logical channel. Therefore, when the size of the data packet exceeds the capacity of the logical channel, no resource is allocated to the data packet on the logical channel. According to the resource allocation method provided in this application, the communications device determines, based on the time duration and the capacity of the logical channel within the time duration that are in the logical channel configuration information, whether to allocate the resource to the data packet on the logical channel. This can avoid a case in which a resource needs to be preempted from another logical channel because a size of a data packet transmitted on the logical channel is greater than a maximum volume of data that can be transmitted on the logical channel within the time duration, and ensure that a volume of data transmitted on the logical channel of the communications device does not exceed a limit of a volume of data that can be transmitted on the logical channel when a delay requirement is met, thereby improving communication efficiency.

It should be understood that, in this embodiment of this application, the logical channel configuration information may be radio resource control (Radio Resource Control, RRC) information sent by the network device to the communications device, and the RRC information may carry the time duration of the logical channel of the communications device and the capacity within the time duration. Certainly, the logical channel configuration information may alternatively be sent to the communications device in another possible manner. This is not limited in this embodiment of this application.

It should be further understood that the logical channel may be a logical channel used to transmit a delay critical guaranteed bit rate QoS flow (Delay Critical GBR QoS flow). In other words, all data packets of services transmitted on the logical channel need to strictly meet the delay requirement. Alternatively, the logical channel may be a logical channel used to transmit a non-delay critical guaranteed bit rate QoS flow. This is not limited in this embodiment of this application.

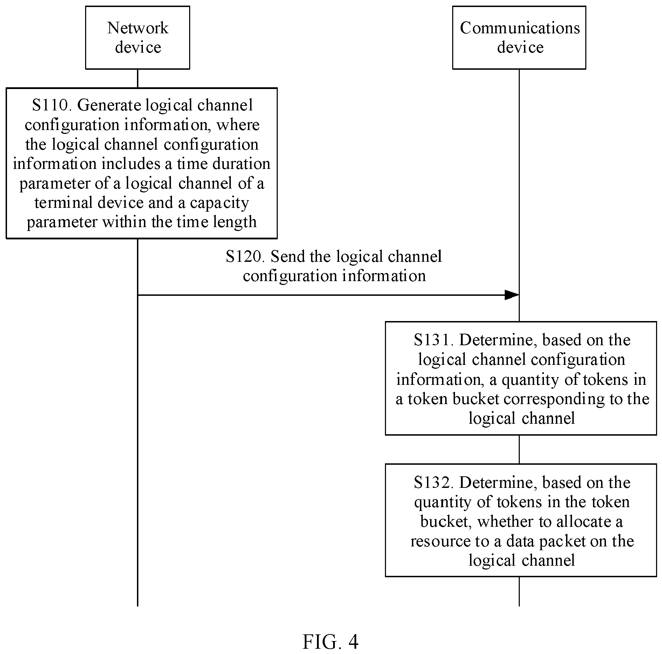

As shown in FIG. 4, that the communications device determines, based on the logical channel configuration information, whether to allocate a resource to a data packet on the logical channel in S130 includes:

S131. The communications device determines, based on the logical channel configuration information, a quantity of tokens in a token bucket corresponding to the logical channel.

S132. The communications device determines, based on the quantity of tokens in the token bucket, whether to allocate the resource to the data packet on the logical channel.

Specifically, in S131, after receiving the logical channel configuration information, the communications device may determine, based on the time duration and the capacity of the logical channel within the time duration that are in the logical channel configuration information, the quantity of tokens in the token bucket corresponding to the logical channel. Each logical channel corresponds to one token bucket, and a capacity of the logical channel is a capacity of the token bucket. The quantity of tokens in the token bucket may be used to determine whether to transmit the data packet. The quantity of tokens in the token bucket may be determined based on the time duration of the logical channel and the capacity of the logical channel within the time duration. In S132, the communications device may determine, based on the quantity of tokens in the token bucket, whether to allocate the resource to the data packet on the logical channel. The time duration of the logical channel and the capacity of the logical channel within the time duration may represent a data transmission capability of the logical channel. The quantity of tokens in the token bucket of the logical channel is associated with the transmission capability of the logical channel. In other words, a condition for determining whether to allocate the resource to the data packet on the logical channel is associated with the transmission capability of the logical channel. Because the quantity of tokens in the token bucket is determined by the time duration of the logical channel and the capacity of the logical channel within the time duration, the communications device determines, based on the quantity of tokens in the token bucket, whether to allocate the resource to the data packet on the logical channel. In other words, whether to allocate the resource to the data packet on the logical channel may be determined with reference to the transmission capability of the logical channel, so that accuracy of determining whether to allocate the resource to the data packet on the logical channel can be improved. Therefore, this avoids a case in which a resource needs to be preempted from another logical channel when the data packet is transmitted, thereby improving communication efficiency and user experience.

In an embodiment, the quantity of tokens in the token bucket is greater than or equal to 0, and that the communications device determines, based on the quantity of tokens in the token bucket, whether to allocate the resource to the data packet on the logical channel in S132 includes:

When a size of the data packet is less than or equal to the quantity of tokens in the token bucket, the communications device determines to allocate the resource to the data packet on the logical channel.

In the current technology, a quantity of tokens in a token bucket may be allowed to be less than 0, and a data packet whose size is greater than a volume of data that can be transmitted on the logical channel may be allowed to be transmitted. In this case, a resource needs to be preempted from another logical channel when the data packet is transmitted, and resources are insufficient when the another logical channel transmits data. Consequently, normal data transmission on the another logical channels is affected. In this embodiment of this application, the quantity of tokens in the token bucket of the logical channel is greater than or equal to 0, and a case in which the quantity of tokens is less than 0 is not allowed. An example is used for description. It is assumed that the volume of data that can be transmitted on the logical channel (the capacity of the logical channel) within the time duration is 70 KB, and the quantity of tokens in the token bucket is 50 KB. However, a data packet of 80 KB needs to be transmitted. If the data packet is allowed to be transmitted, after the transmission is complete, the quantity of tokens is -30 KB, which is less than 0. Therefore, in this embodiment of this application, the data packet is not allowed to be transmitted in this case, that is, no transmission resource is allocated to the data packet. The communications device allocates a resource to the data packet on the logical channel only when a size of the data packet is less than or equal to the quantity of tokens in the token bucket. This avoids a case in which a size of a transmitted data packet may exceed the volume of the data that can be transmitted on the logical channel. For example, if transmission of the data packet is allowed, a resource of 80 KB is required for transmitting the data packet. However, a resource on the logical channel is of only 50 KB, so that an additional resource of 30 KB need to be preempted from another logical channel. Consequently, data transmission on the another logical channel is affected. In this embodiment, the resource is allocated to the data packet only when the quantity of tokens in the token bucket is greater than or equal to 0 and the size of the data packet is less than or equal to the quantity of tokens in the token bucket. This can ensure that the size of the transmitted data packet does not exceed the volume of the data that can be transmitted on the logical channel, and avoid a case in which data transmission on another logical channel is affected because a resource is preempted from the another logical channel. Therefore, data packet transmission is more ensured and communication efficiency is improved.

In an embodiment, that the communications device determines, based on the logical channel configuration information, a quantity of tokens in a token bucket corresponding to the logical channel in S 131 includes:

The communications device determines an update periodicity of the tokens in the token bucket and a capacity of the token bucket based on the logical channel configuration information; and
the communications device determines the quantity of tokens in the token bucket based on the update periodicity of the tokens in the token bucket and the capacity of the token bucket.

Specifically, after receiving the logical channel configuration information, the communications device may determine the update periodicity of the tokens in the token bucket and the capacity of the token bucket based on the time duration of the logical channel and the capacity within the time duration that are in the logical channel configuration information. According to the foregoing token bucket mechanism, tokens in the token bucket are continuously added into the token bucket at a constant rate. After a data packet is transmitted, tokens in the token bucket are consumed, and a quantity of the consumed tokens is equal to a size of the data packet. That is, the quantity of tokens in the token bucket is related to a quantity of added tokens, a capacity of the token bucket, and a consumption quantity of tokens. Therefore, the update periodicity of the tokens in the token bucket and the capacity of the token bucket may be determined based on the time duration of the logical channel and the capacity within the time duration that are in the logical channel configuration information. That is, the update periodicity of the tokens in the token bucket is associated with the capacity of the token bucket and a transmission capability of the logical channel, so that the quantity of tokens in the token bucket more truly reflects a requirement on a volume of data transmitted on the logical channel within the time duration. The communications device determines the quantity of tokens in the token bucket based on the update periodicity of the tokens in the token bucket and the capacity of the token bucket. The quantity of tokens in the token bucket can be more accurately determined, and accuracy of determining, based on the quantity of tokens in the token bucket, whether to transmit a data packet on the logical channel can be improved.

In an embodiment, the time duration is a packet delay budget PDB corresponding to a service transmitted on the logical channel, and the update periodicity of the tokens in the token bucket is the PDB.

Specifically, one logical channel corresponds to one PDB, indicating a maximum transmission delay allowed for transmitting a data packet on the logical channel. This means that a volume of data transmitted on the logical channel within the PDB cannot exceed a specific threshold. For example, for a logical channel, a PDB of the logical channel indicates that when a data packet of a service is transmitted on the logical channel, a transmission delay of the data packet cannot exceed the PDB value. In addition, the communications device determines, based on a quantity of tokens in a token bucket of the logical channel, whether to transmit the data packet on the logical channel. Therefore, it needs to be ensured that the quantity of tokens in the token bucket within the PDB is not greater than the threshold. An update periodicity of the tokens in the token bucket is determined as the PDB. In the PDB period, tokens are added into the token bucket only once. For example, it is assumed that both a capacity of the token bucket and the threshold are 160 KB.

The quantity of tokens in the token bucket is 151 KB. If a volume of to-be-transmitted data is 170 KB, data of a volume of 151 KB may be transmitted at a time. That is, the tokens in the token bucket are exhausted. Because the tokens in the token bucket continuously increase, it is very likely that an accumulated quantity of tokens in the token bucket exceeds 19 KB in the PDB, which means that a volume of data transmitted on the logical channel exceeds the threshold in the PDB. In this case, the logical channel needs to preempt a transmission resource from another logical channel. Consequently, transmission on the another logical channel is limited. In this embodiment of this application, the time duration is the packet delay budget PDB corresponding to the logical channel. The update periodicity of the tokens in the token bucket is determined as the PDB. In other words, in the PDB period, the tokens in the token bucket increase only once, even if a size of a transmitted data packet is equal to the threshold at a moment. However, in a subsequent PDB period, because the quantity of tokens does not increase, a data packet is not transmitted. This avoids a case in which a data packet transmitted in the PDB period exceeds the threshold, and avoids a problem that transmission is limited on another logical channel because the logical channel preempts a resource from the another logical channel. Therefore, transmission is more ensured.

It should be understood that the time duration may alternatively be greater than the packet delay budget PDB corresponding to the logical channel, and the update periodicity of the tokens in the token bucket is the time duration. This is not limited in this embodiment of this application.

It should be further understood that a quantity of tokens added in each update may be a PBR multiplied by the time duration, or the token bucket may be directly filled up. This is not limited in this embodiment of this application.

It should be further understood that the update periodicity of the tokens in the token bucket may start from establishment of the logical channel. A time axis may be divided at PDB intervals. Alternatively, a timer may be set, and duration of the timer is the PDB. Each time the timer expires, tokens are updated. The timer is started when the logical channel is established. When a new data packet arrives at the logical channel and is transmitted on the logical channel, the timer is restarted; or when a quantity of tokens in the token bucket reaches a threshold, the timer is restarted. The threshold may be a bucket size of the token bucket, or the threshold may be set to a value less than the bucket size of the token bucket. This is not limited in this embodiment of this application.

In an embodiment, the time duration is the packet delay budget PDB corresponding to the service transmitted on the logical channel, the capacity includes bucket size duration BSD of the token bucket and an update rate of the token bucket, and the BSD is determined based on the PDB and a maximum data burst volume MDBV within the PDB.

Specifically, the time duration may be the packet delay budget PDB corresponding to the logical channel, and the capacity of the logical channel may include the bucket size duration BSD of the token bucket and the update rate of the token bucket. The BSD is determined based on the maximum data burst volume MDBV corresponding to the PDB. The MDBV indicates a maximum volume of data transmitted on the logical channel in the PDB, that is, a size of a data packet transmitted on the logical channel in the PDB cannot exceed the MDBV The communications device transmits the data packet on the logical channel only when the size of the data packet is less than or equal to the quantity of tokens in the token bucket. Therefore, a capacity of the token bucket may be set to the MDBV That is, a maximum quantity of tokens in the token bucket is the MDBV, and a quantity of tokens stored in the token bucket does not exceed the MDBV For a data packet whose size exceeds the MDBV, the communications device does not transmit the data packet on the logical channel. Because the capacity of the token bucket may be calculated by multiplying the BSD by the update rate of the token bucket, the network device sets the BSD to be the MDBV divided by the update rate of the token bucket. The update rate of the token bucket may be a PBR corresponding to the logical channel, and the BSD and the PBR are notified to the communications device by using the logical channel configuration information. The communications device determines, based on the BSD and the PBR, that the capacity of the token bucket is the MDBV. The update time of tokens in the token bucket is set to the PDB, and the capacity of the token bucket is the MDBV Because the communications device transmits the data packet on the logical channel only when the size of the data packet is less than or equal to the quantity of tokens in the token bucket, it is ensured that a volume of data transmitted on the logical channel is not greater than the MDBV within the PDB.

In an embodiment, the time duration is the packet delay budget PDB corresponding to the service transmitted on the logical channel, the capacity includes the capacity of the token bucket, and the capacity of the token bucket is the maximum data burst volume MDBV within the PDB.

Specifically, the time duration may be the packet delay budget PDB corresponding to the logical channel, and the capacity of the logical channel may include the capacity of the token bucket. The capacity of the token bucket is the maximum data burst volume MDBV within the PDB. The MDBV indicates a maximum volume of data transmitted on the logical channel in the PDB, that is, a size of a data packet transmitted on the logical channel in the PDB cannot exceed the MDBV The capacity of the token bucket is set to the MDB V, that is, for a data packet whose size exceeds the MDB V, the communications device does not transmit the data packet on the logical channel. Because the communications device transmits the data packet on the logical channel only when the size of the data packet is less than or equal to the quantity of tokens in the token bucket, it is ensured that a volume of data transmitted on the logical channel is not greater than the MDBV within the PDB.

It should be understood that, in this embodiment of this application, the capacity of the token bucket may alternatively be less than the MDBV That is, a volume of data transmitted on the logical channel within the PDB is not greater than the MDBV This is not limited in this embodiment of this application.

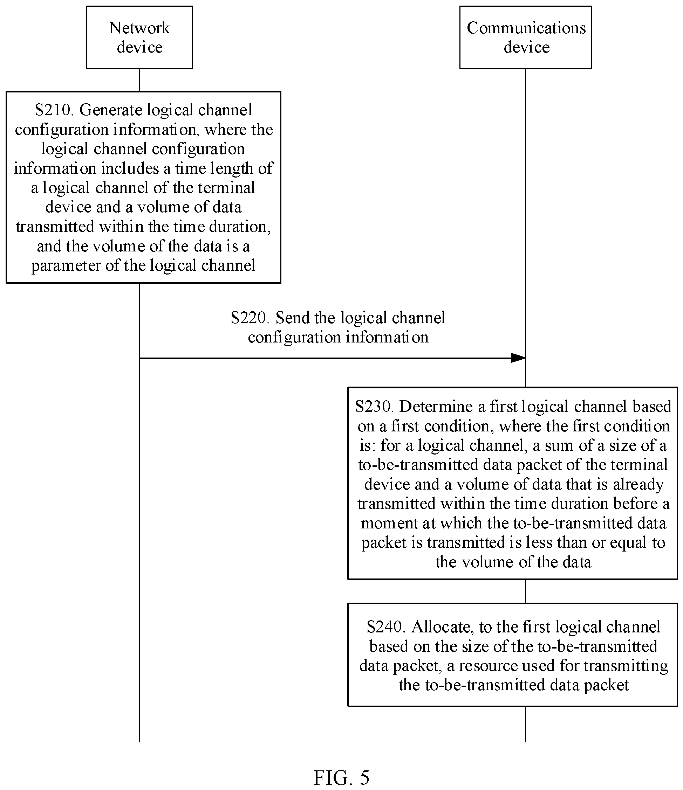

An embodiment of this application further provides a resource allocation method. FIG. 5 is a schematic flowchart of a resource allocation method 200 according to an embodiment of this application. The method 200 may be applied to the scenario shown in FIG. 1, or certainly may be applied to another communication scenario. This is not limited in this embodiment of this application.

As shown in FIG. 5, the method 200 includes, according to the invention, the following steps:

S210. A network device generates logical channel configuration information, where the logical channel configuration information includes a time duration of a logical channel of a communications device and a volume of data transmitted within the time duration, and the volume of the data is a parameter of the logical channel.

S220. The network device sends the logical channel configuration information to the communications device, and correspondingly, the communications device receives the logical channel configuration information.

S230. The communications device determines a first logical channel based on a first condition, where the first condition is: for a logical channel, a sum of a size of a to-be-transmitted data packet of the communications device and a volume of data that is already transmitted within the time duration before a moment at which the to-be-transmitted data packet is transmitted is less than or equal to the volume of the data.

S240. The communications device allocates, to the first logical channel based on the size of the to-be-transmitted data packet, a resource used for transmitting the to-be-transmitted data packet.

According to the resource allocation method provided in this application, the network device configures a time duration and a volume of data transmitted within the time duration for a logical channel of the communications device. When needing to transmit the data packet on a logical channel, the communications device determines, based on the size of the to-be-transmitted data packet, the time duration, and the volume of the data transmitted within the time duration, a logical channel (the first logical channel) for which the sum of the size of the to-be-transmitted data packet and the volume of the data that is already transmitted within the time duration before the moment at which the to-be-transmitted data packet is transmitted is less than or equal to the volume of the data that can be transmitted, that is, the first logical channel is used to transmit the to-be-transmitted data packet. Then, the communications device allocates the transmission resource to the to-be-transmitted data packet. This ensures that a volume of data transmitted on the logical channel of the communications device does not exceed a limit of the volume of the data that can be transmitted on the logical channel within the time duration. In this way, each logical channel of the communications device meets a limit on a volume of data that is transmitted on the logical channel, so that a transmission delay requirement of each logical channel is met, thereby improving efficiency of transmitting a data packet by the communications device, and improving user experience.

Specifically, when needing to transmit the data packet on the logical channel, the communications device needs to allocate the resource to the logical channel. The communications device may obtain the time duration of the logical channel of the communications device and the volume of the to-be-transmitted data within the time duration that are sent by the network device. Each logical channel of the communications device corresponds to one time duration and a volume of data transmitted within the time duration. The communications device may have one or more logical channels. The time duration of the logical channel may indicate a delay requirement that needs to be met when data is transmitted on the logical channel, and the volume of the data transmitted within the time duration indicates a maximum volume of data that can be transmitted on the logical channel within a time specified by the delay requirement. For example, if the time duration is 20 ms, it indicates that the delay requirement for transmitting the data packet on the logical channel cannot exceed 20 ms. The volume of the data transmitted within the time duration may be the maximum volume of the data that can be transmitted on the logical channel when the delay requirement is met, that is, within 20 ms. If a volume of data transmitted on the logical channel within the time duration is less than or equal to the maximum volume of the data, it indicates that the logical channel can meet a transmission delay requirement, and a transmission resource may be allocated to the to-be-transmitted data packet to be transmitted on the logical channel. If a volume of data transmitted on the logical channel within the time duration is greater than the maximum volume of the data, it indicates that the logical channel cannot meet a transmission delay requirement, the to-be-transmitted data packet cannot be transmitted on the logical channel, and no transmission resource is allocated to the to-be-transmitted data packet to be transmitted on the logical channel. The communications device determines, based on the time duration of the logical channel and the volume of the data transmitted within the time duration and with reference to the size of the to-be-transmitted data packet that needs to be transmitted, whether to transmit the data packet on the logical channel. To be specific, the communications device determines, based on the first condition, the first logical channel that can be used to transmit the to-be-transmitted data packet, and then allocates, to the first logical channel, the resource used to transmit the to-be-transmitted data packet. The first condition is: for a logical channel, a sum of a data volume of the to-be-transmitted data packet of the communications device and a volume of data that is already transmitted within the time duration before a moment at which the to-be-transmitted data packet is transmitted is less than or equal to the volume of the data to be transmitted. In addition, a quantity of tokens in a token bucket of the first logical channel is greater than 0. In other words, for the first logical channel, a total data volume of data packets that need to be transmitted by the communications device within the time duration cannot exceed a volume of data (the maximum volume of the data) that can be transmitted on the logical channel within the time duration. For example, for a logical channel, the time duration is 20 ms, a volume of data transmitted within the time duration is 100 KB, and a size of a to-be-transmitted data packet is 80 KB. It is assumed that the to-be-transmitted data packet arrives at a moment T. The communications device needs to determine whether a sum of a volume of data that is already transmitted within 20 ms before the moment T and a data volume of the to-be-transmitted data packet is less than or equal to 100 KB. That is, the data that is already transmitted on the logical channel within 20 ms before the moment T cannot exceed 20 KB. For a volume of transmitted data less than that of the logical channel, the data that is already transmitted on the logical channel within 20 ms before the moment T should be less than 20 KB. For a volume of transmitted data equal to that of the logical channel, the data that is already transmitted on the logical channel within 20 ms before the moment T should be equal to 20 KB. If the data that is already transmitted on the logical channel within 20 ms before the moment T exceeds 20 KB, and the to-be-transmitted data packet continues to be transmitted on the logical channel, a volume of data transmitted on the logical channel within the time duration is greater than a volume of transmitted data (the maximum volume of the data) within the time duration. In this case, some additional resources need to be preempted from another logical channel to transmit the to-be-transmitted data packet. Consequently, resources of the another logical channel are limited, and data packet transmission on the another logical channel is affected. Therefore, before transmitting the to-be-transmitted data packet, the communications device needs to determine, based on the first condition, the first logical channel that can be used to transmit the to-be-transmitted data packet, and then allocate, to the first logical channel, the resource used to transmit the to-be-transmitted data packet. This ensures that a volume of data transmitted on the logical channel of the communications device does not exceed a limit of the volume of the data that can be transmitted on the logical channel within the time duration. This can avoid a case in which a resource needs to be preempted from another logical channel because a size of a data packet transmitted on the logical channel is greater than the maximum volume of the data that can be transmitted on the logical channel within the time duration, so that the logical channel of the communications device meets a limit requirement on the data transmission volume, thereby improving efficiency of transmitting a data packet by the communications device, and improving user experience.

It should be understood that, in this embodiment of this application, the logical channel configuration information may be radio resource control (Radio Resource Control, RRC) information sent by the network device to the communications device, and the RRC information may carry the time duration of the logical channel of the communications device and the capacity within the time duration. Certainly, the logical channel configuration information may alternatively be sent to the communications device in another possible manner. This is not limited in this embodiment of this application.

It should be further understood that the logical channel of the communications device may also be a logical channel used to transmit a delay critical guaranteed bit rate QoS flow (Delay Critical GBR QoS flow). To be specific, all data packets transmitted on the logical channel need to strictly meet a delay requirement. Alternatively, the logical channel may be a logical channel used to transmit a non-delay critical guaranteed bit rate QoS flow. This is not limited in this embodiment of this application.

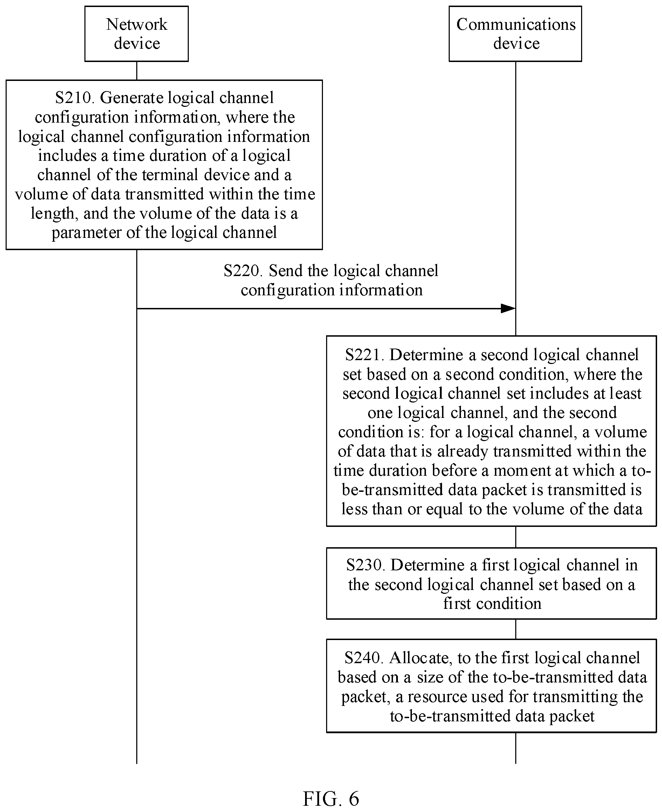

In an embodiment, as shown in FIG. 6, the method 200 further includes, according to the invention, the following step

S221. The communications device determines a second logical channel set based on a second condition, where the second logical channel set includes at least one logical channel, and the second condition is: for a logical channel, the volume of the data that is already transmitted within the time duration before the moment at which the to-be-transmitted data packet is transmitted is less than or equal to the data transmission volume.

In S230, that the communications device determines a first logical channel based on a first condition includes, according to the invention:

The communications device determines the first logical channel from the second logical channel set based on the first condition.

Specifically, the first condition met by the first logical channel is: for a logical channel, the sum of the data volume of the to-be-transmitted data packet of the communications device and the volume of the data that is already transmitted within the time duration before the moment at which the to-be-transmitted data packet is transmitted is less than or equal to the data transmission volume. Therefore, before determining the first logical channel, the communications device may determine the second logical channel set based on the second condition. The second logical channel set includes at least one logical channel of the communications device. The second condition is: for a logical channel, the volume of the data that is already transmitted within the time duration before the moment at which the to-be-transmitted data packet is transmitted is less than or equal to the data transmission volume. A quantity of tokens in a token bucket of a logical channel in the second logical channel set is greater than 0. For example, for a logical channel, the time duration is 20 ms, a volume of data transmitted within the time duration is 100 KB, and a size of a to-be-transmitted data packet is 80 KB. It is assumed that the to-be-transmitted data packet arrives at a moment T. The first condition used by the communications device to determine the first logical channel is: a volume of data that is already transmitted on the logical channel within 20 ms before the moment T cannot exceed 20 KB. In other words, all logical channels that meet the first condition are first logical channels. In addition, the second condition is: a volume of data that is already transmitted on the logical channel within 20 ms before the moment T cannot exceed 100 KB. In other words, all logical channels that meet the second condition are logical channels in the second logical channel set. It can be learned that a range of the first condition is smaller, and a range of the second condition is larger. The first logical channel that meets the first condition is definitely one or more logical channels in the second logical channel set, but a logical channel that meets the second condition in the second logical channel set is not necessarily the first logical channel that meets the first condition. Therefore, in S221, the communications device may first determine the second logical channel set based on the second condition, where the second logical channel set includes at least one logical channel. In S230, the communications device determines the first logical channel from the second logical channel set based on the first condition, instead of directly determining the first logical channel from all logical channels of the communications device. In this way, a range in which the communications device needs to determine the first logical channel is narrowed, so that efficiency and accuracy of determining the first logical channel by the communications device are improved, and communication efficiency is improved.

In an embodiment, the time duration is a packet delay budget PDB corresponding to the logical channel.

Specifically, one logical channel corresponds to one PDB, indicating a maximum transmission delay allowed for transmitting a data packet on the logical channel. This means that a volume of data transmitted on the logical channel in the PDB cannot exceed a threshold. For example, for a logical channel, a PDB of the logical channel indicates that when a data packet of a service is transmitted on the logical channel, a transmission delay of the data packet cannot exceed the PDB value. Therefore, the time duration is set to the packet delay budget PDB corresponding to the logical channel, and a volume of data transmitted within the time duration is a maximum volume of data that can be transmitted on the logical channel within the PDB. In this way, the time duration and the volume of the data transmitted within the time duration can more truly and accurately reflect a requirement on a delay and a requirement on the data transmission volume during data packet transmission on the logical channel. This improves accuracy of determining, by the communications device, the first logical channel or the second logical channel set based on the time duration and the volume of the data that is already transmitted within the time duration. Further, this ensures that a volume of data transmitted on the logical channel of the communications device does not exceed a limit of the volume of the data that can be transmitted on the logical channel within the time duration, thereby improving communication efficiency and user experience.

It should be understood that the time duration may alternatively be greater than the packet delay budget PDB corresponding to the logical channel. This is not limited in this embodiment of this application.

In an embodiment, the time duration is the packet delay budget PDB corresponding to the logical channel, and the data transmission volume is a maximum data burst volume MDBV within the PDB.

Specifically, one logical channel corresponds to one PDB, the PDB represents a maximum transmission delay allowed for transmitting a data packet on the logical channel, the time duration may be the packet delay budget PDB corresponding to the logical channel, and the volume of the data transmitted within the time duration is the maximum data burst volume MDBV corresponding to the PDB. The MDBV indicates a maximum volume of data transmitted on the logical channel in the PDB, that is, a size of a data packet transmitted on the logical channel in the PDB cannot exceed the MDBV The time duration is set to the PDB. The volume of the data transmitted within the time duration is set to the MDBV corresponding to the PDB. Accuracy of determining the first logical channel by the communications device based on the first condition or based on the first condition and the second condition can be ensured, and that a volume of data transmitted on each logical channel of the communications device within the PDB does not exceed the MDBV can be ensured. This improves communication efficiency and user experience.

It should be understood that in the embodiments of this application, the first and the second are merely used to indicate that a plurality of objects are different. For example, the first logical channel and the second logical channel are merely for representing different logical channels. The logical channels and a quantity of logical channels are not affected, and the foregoing first, second, and the like should not impose any limitation on the embodiments of this application.

It should be further understood that the foregoing descriptions are merely intended to help a person skilled in the art better understand the embodiments of this application, but are not intended to limit the scope of the embodiments of this application. a person skilled in the art can make various equivalent modifications or changes, or may add some new steps, or the like based on the foregoing examples. Alternatively, any two or more of the foregoing embodiments may be combined. Such modified, changed, or combined solutions also fall within the scope of the embodiments of this application.

It should be further understood that sequence numbers of the foregoing processes do not mean execution sequences. The execution sequences of the processes should be determined based on functions and internal logic of the processes, and should not be construed as any limitation on the implementation processes of the embodiments of this application.

It should be further understood that, the foregoing descriptions of the embodiments of this application focus on differences between the embodiments. For same or similar parts that are not mentioned, refer to each other. For brevity, details are not described herein again.

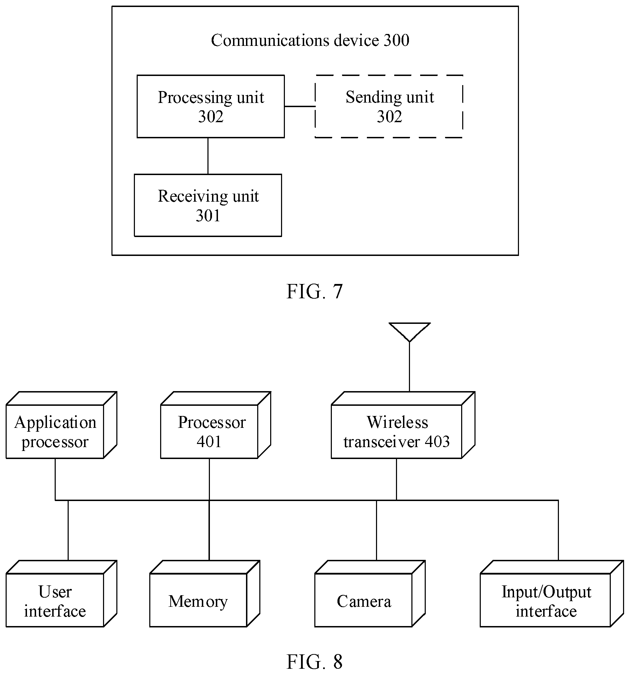

This application provides a communications device. The communications device may perform the embodiments in the method 100 and the steps performed by the communications devices shown in FIG. 3 and FIG. 4. The communications device may be a terminal, or may be hardware implementing a similar function. As shown in FIG. 7, the communications device 300 includes:
a receiving unit 301, configured to receive logical channel configuration information sent by a network device, where the logical channel configuration information includes a time duration and a capacity within the time duration, and the capacity is a parameter of a logical channel; and
a processing unit 302, configured to determine, based on the logical channel configuration information, whether to allocate a resource to a data packet on the logical channel.

The processing unit 302 is specifically configured to: determine, based on the logical channel configuration information, a quantity of tokens in a token bucket corresponding to the logical channel; and determine, based on the quantity of tokens in the token bucket, whether to allocate the resource to the data packet on the logical channel.

The quantity of tokens in the token bucket is greater than or equal to 0, and the processing unit 302 is specifically configured to: when a size of the data packet is less than or equal to the quantity of tokens in the token bucket, determine to allocate the resource to the data packet on the logical channel.

The processing unit 302 is specifically configured to: determine an update periodicity of the tokens in the token bucket and a capacity of the token bucket based on the logical channel configuration information; and determine the quantity of tokens in the token bucket based on the update periodicity of the tokens in the token bucket and the capacity of the token bucket.

The time duration is a packet delay budget PDB corresponding to a service transmitted on the logical channel, and the update periodicity of the tokens in the token bucket is the PDB.

The time duration is the packet delay budget PDB corresponding to the service transmitted on the logical channel, the capacity includes bucket size duration BSD of the token bucket and an update rate of the token bucket, and the BSD is determined based on the PDB and a maximum data burst volume MDBV within the PDB.

The time duration is the packet delay budget PDB corresponding to the service transmitted on the logical channel, the capacity includes the capacity of the token bucket, and the capacity of the token bucket is a maximum data burst volume MDBV within the PDB.

The communications device further includes a sending unit 303, configured to send data, a signal, or the like. The sending unit 303 shown by dashed lines in FIG. 7 is optional.

It may be understood that the sending unit 303 and the receiving unit 301 may be combined into a transceiver unit, and implement a similar function. Details are not described herein again.

When the communications device in this embodiment is a terminal, refer to a device shown in FIG. 8. The device includes a processor 401, an application processor, a memory, a user interface, and some other elements (including a device such as a power supply that is not shown). The processing unit may be the processor 401, and completes a corresponding function. The sending unit and/or the receiving unit may be a wireless transceiver 403 in the figure, and implement a corresponding function by using an antenna. It may be understood that the elements shown in the figure are merely an example, but are not mandatory elements for implementing this embodiment.

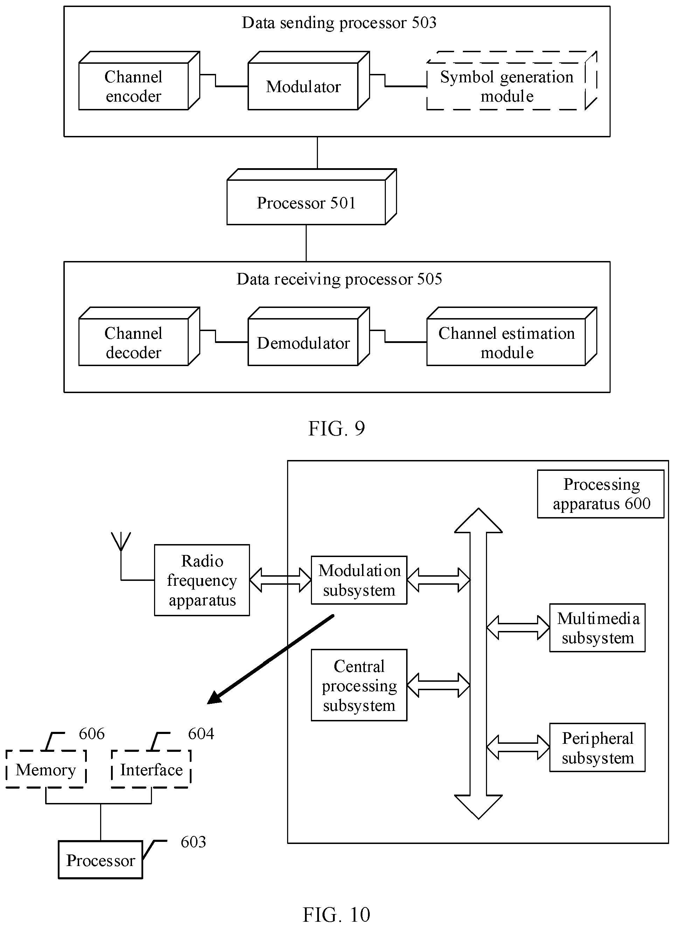

When the communications device in this embodiment is a terminal, refer to a device shown in FIG. 9. In an example, the communications device may implement a function similar to that of the processor in FIG. 8. In FIG. 9, the communications device includes a processor 501, a data sending processor 503, and a data receiving processor 505. In FIG. 9, the processing unit may be the processor 501, and completes a corresponding function. The sending unit may be the data sending processor 503 in FIG. 9, and the receiving unit may be the data receiving processor 505 in FIG. 9. Although a channel encoder and a channel decoder are shown in the figure, it may be understood that the modules are merely an example, but do not constitute a limitation on this embodiment.

FIG. 10 shows another form of this embodiment. A processing apparatus 600 includes modules such as a modulation subsystem, a central processing subsystem, and a peripheral subsystem. The communications device in this embodiment may be used as the modulation subsystem in the processing apparatus 600. Specifically, the modulation subsystem may include a processor 603 and an interface 604. The processor 603 implements a function of the processing unit, and the interface 604 implements a function of the sending unit and/or receiving unit. In another variant, the modulation subsystem includes a memory 606, the processor 603, and a program that is stored in the memory and that can run on the processor. When executing the program, the processor implements the method in any one of the method embodiments. It should be noted that the memory 606 may be non-volatile or volatile, and may be located inside the modulation subsystem or in the processing apparatus 600, provided that the memory 606 can be connected to the processor 603.

In another form of this embodiment, a computer-readable storage medium is provided. The computer-readable storage medium stores an instruction, and when the instruction is executed, the embodiments in the method 100 are performed.

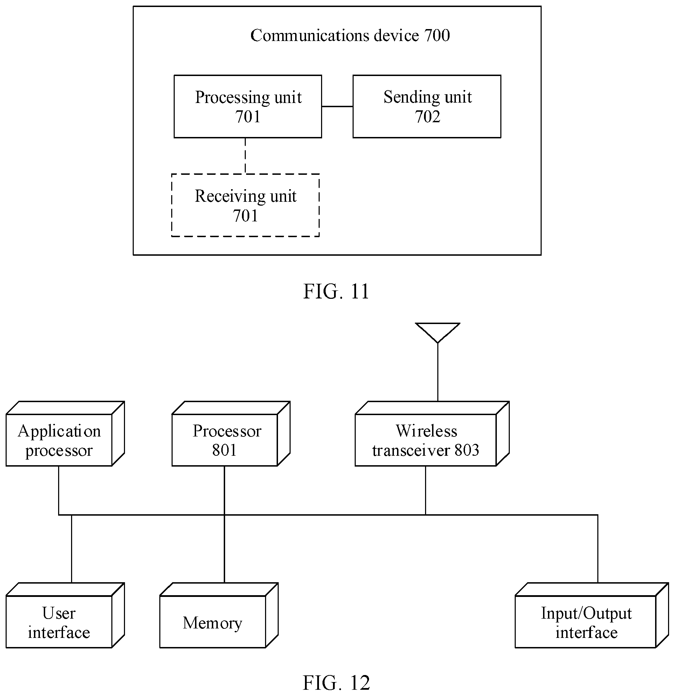

This application further provides a communications device. The communications device may perform the embodiments in the method 100 and the steps performed by the network devices shown in FIG. 3 and FIG. 4. The communications device may be a network device, or may be hardware implementing a similar function. As shown in FIG. 11, the communications device 700 includes:
a processing unit 701, configured to generate logical channel configuration information, where the logical channel configuration information includes a time duration of a logical channel of a terminal device and a capacity within the time duration, and the capacity is a parameter of the logical channel; and
a sending unit 702, configured to send the logical channel configuration information to the terminal device, where the logical channel configuration information is used by the terminal device to determine whether to allocate a resource to a data packet on the logical channel.

The capacity is a capacity of a token bucket corresponding to the logical channel, the time duration is a packet delay budget PDB corresponding to a service transmitted on the logical channel, the capacity includes bucket size duration BSD of the token bucket and an update rate of the token bucket, and the BSD is determined based on the PDB and a maximum data burst volume MDBV within the PDB.

The capacity is a capacity of a token bucket corresponding to the logical channel, the time duration is a packet delay budget PDB corresponding to a service transmitted on the logical channel, the capacity includes the capacity of the token bucket, and the capacity of the token bucket is the PDB and a maximum data burst volume MDBV within the PDB.

The communications apparatus further includes a receiving unit 703, configured to receive data, a signal, or the like, as shown by dashed lines in FIG. 11. Content shown by the dashed lines in FIG. 11 is optional.

It may be understood that the sending unit 702 and the receiving unit 701 may be combined into a transceiver unit, and implement a similar function. Details are not described herein again.

When the communications device in this embodiment is a network device, refer to a device shown in FIG. 12. The device 800 includes a processor 801, an application processor, a memory, a user interface, and some other elements (including a device such as a power supply that is not shown). In FIG 12, the processing unit may be the processor 801, and completes a corresponding function. The sending unit and/or the receiving unit may be a wireless transceiver 803 in the figure, and implement a corresponding function by using an antenna. It may be understood that the elements shown in the figure are merely an example, but are not mandatory elements for implementing this embodiment.

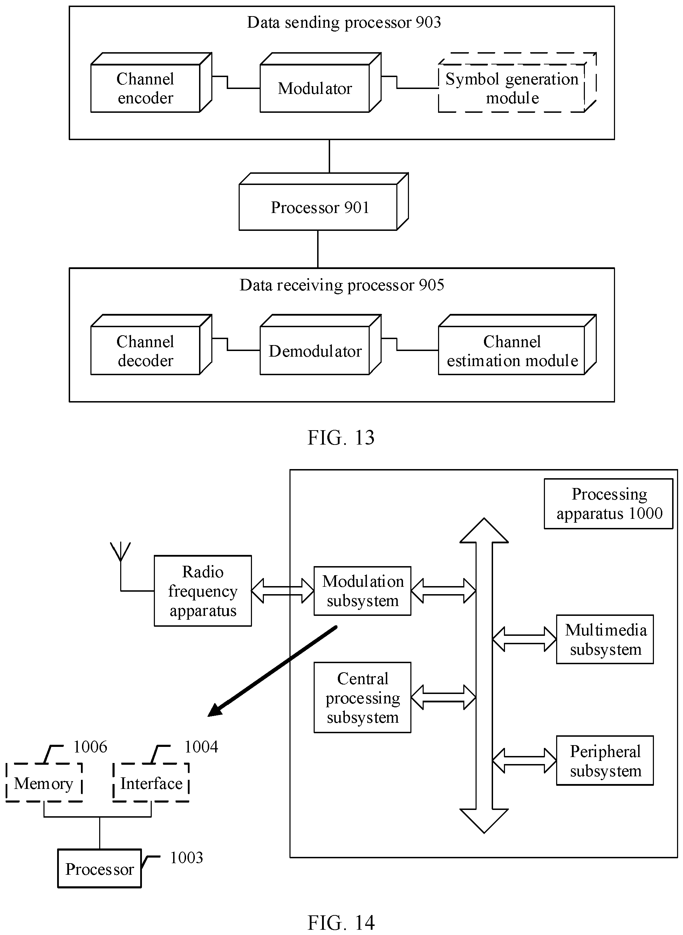

When the communications device in this embodiment is a network device, refer to a device shown in FIG. 13. In an example, the device 900 may implement a function similar to that of the processor in FIG. 12. In FIG. 13, the device 900 includes a processor 901, a data sending processor 903, and a data receiving processor 905. In FIG. 13, the processing unit may be the processor 901, and completes a corresponding function. The sending unit may be the data sending processor 903 in FIG. 13, and the receiving unit may be the data receiving processor 905 in FIG. 13. Although a channel encoder and a channel decoder are shown in the figure, it may be understood that the modules are merely an example, but do not constitute a limitation on this embodiment.

FIG. 14 shows another form of this embodiment. A processing apparatus 1000 includes modules such as a modulation subsystem, a central processing subsystem, and a peripheral subsystem. The communications device in this embodiment may be used as the modulation subsystem in the processing apparatus 1000. Specifically, the modulation subsystem may include a processor 1003 and an interface 1004. The processor 1003 implements a function of the processing unit, and the interface 1004 implements a function of the sending unit and/or receiving unit. In another variant, the modulation subsystem includes a memory 1006, the processor 1003, and a program that is stored in the memory and that can run on the processor. When executing the program, the processor implements the method in any one of the method embodiments. It should be noted that the memory 1006 may be non-volatile or volatile, and may be located inside the modulation subsystem or in the processing apparatus 1000, provided that the memory 1006 can be connected to the processor 1003.

In another form of this embodiment, a computer-readable storage medium is provided. The computer-readable storage medium stores an instruction, and when the instruction is executed, the embodiments performed by the network device in the method 100 are performed.

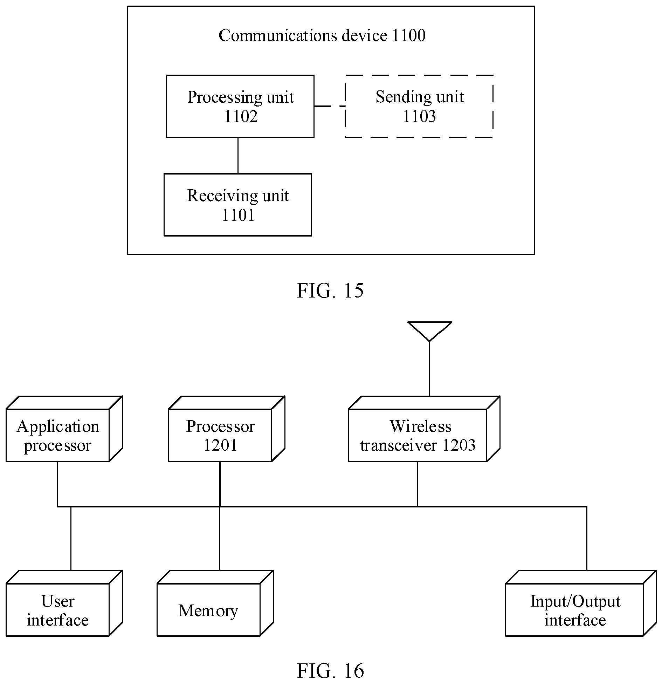

This application provides a communications device. The communications device may perform the embodiments in the method 200 and the steps performed by the communications devices shown in FIG. 5 and FIG. 6. The communications device may be a terminal, or may be hardware implementing a similar function. As shown in FIG. 15, the communications device 1100 includes:
a receiving unit 1101, configured to receive logical channel configuration information sent by a network device, where the logical channel configuration information includes a time duration and a volume of data transmitted within the time duration, and the volume of the data is a parameter of a logical channel; and
a processing unit 1102, configured to determine a first logical channel based on a first condition, where the first condition is: for a logical channel, a sum of a size of a to-be-transmitted data packet of the communications device and a volume of data that is already transmitted within the time duration before a moment at which the to-be-transmitted data packet is transmitted is less than or equal to the volume of the data.

The processing unit 1102 is further configured to allocate, to the first logical channel based on the size of the to-be-transmitted data packet, a resource used for transmitting the to-be-transmitted data packet.

The processing unit 1102 is further configured to: determine a second logical channel set based on a second condition, where the second logical channel set includes at least one logical channel, and the second condition is: for a logical channel, the volume of the data that is already transmitted within the time duration before the moment at which the to-be-transmitted data packet is transmitted is less than or equal to the volume of the data; and determine the first logical channel from the second logical channel set based on the first condition.

The time duration is a packet delay budget PDB corresponding to a service transmitted on the logical channel.

The time duration is the packet delay budget PDB corresponding to the service transmitted on the logical channel, or the volume of the data is a maximum data burst volume MDBV within the PDB.

The communications apparatus further includes a sending unit 1103, configured to send data, a signal, or the like. The sending unit 1103 shown by dashed lines in FIG. 15 is optional.

It may be understood that the sending unit 1102 and the receiving unit 1101 may be combined into a transceiver unit, and implement a similar function. Details are not described herein again.

When the communications device in this embodiment is a terminal, refer to a device shown in FIG. 16. The device includes a processor 1201, an application processor, a memory, a user interface, and some other elements (including a device such as a power supply that is not shown). The processing unit may be the processor 1201, and completes a corresponding function. The sending unit and/or the receiving unit may be a wireless transceiver 1203 in the figure, and implement a corresponding function by using an antenna. It may be understood that the elements shown in the figure are merely an example, but are not mandatory elements for implementing this embodiment.

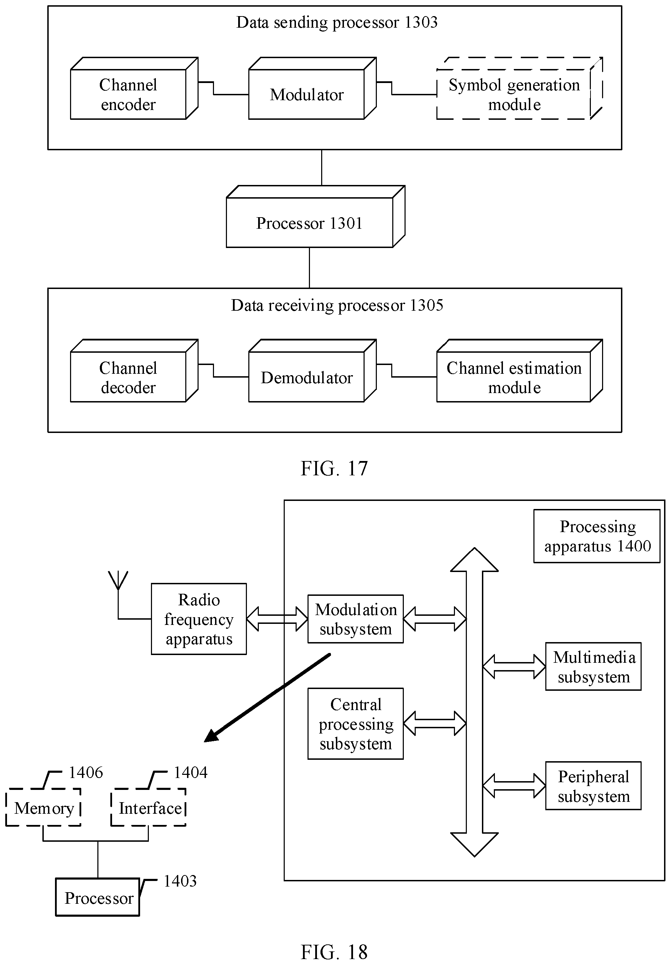

When the communications device in this embodiment is a terminal, refer to a device shown in FIG. 17. In an example, the communications device may implement a function similar to that of the processor in FIG. 16. In FIG. 17, the communications device includes a processor 1301, a data sending processor 1303, and a data receiving processor 1305. In FIG. 17, the processing unit may be the processor 1301, and completes a corresponding function. The sending unit may be the data sending processor 1303 in FIG. 17, and the receiving unit may be the data receiving processor 1305 in FIG. 17. Although a channel encoder and a channel decoder are shown in the figure, it may be understood that the modules are merely an example, but do not constitute a limitation on this embodiment.

FIG. 18 shows another form of this embodiment. A processing apparatus 1400 includes modules such as a modulation subsystem, a central processing subsystem, and a peripheral subsystem. The communications device in this embodiment may be used as the modulation subsystem in the processing apparatus 1400. Specifically, the modulation subsystem may include a processor 1403 and an interface 1404. The processor 1403 implements a function of the processing unit, and the interface 1404 implements a function of the sending unit and/or receiving unit. In another variant, the modulation subsystem includes a memory 1406, the processor 1403, and a program that is stored in the memory and that can run on the processor. When executing the program, the processor implements the method in any one of the method embodiments. It should be noted that the memory 1406 may be non-volatile or volatile, and may be located inside the modulation subsystem or in the processing apparatus 1400, provided that the memory 1406 can be connected to the processor 1403.

In another form of this embodiment, a computer-readable storage medium is provided. The computer-readable storage medium stores an instruction, and when the instruction is executed, the steps performed by the terminal device in the method 200 are performed.

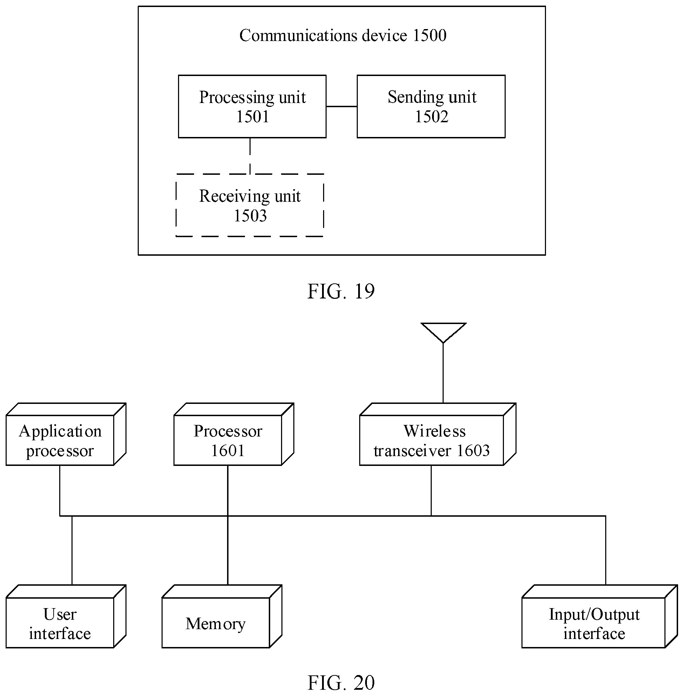

This application provides a communications device. The communications device may perform the embodiments in the method 200 and the steps performed by the network devices shown in FIG. 5 and FIG. 6. The communications device may be a network device, or may be hardware implementing a similar function. As shown in FIG. 19, the communications device 1500 includes:
a processing unit 1501, configured to generate logical channel configuration information, where the logical channel configuration information includes a time duration of a logical channel of a terminal device and a volume of data transmitted within the time duration, and the volume of the data is a parameter of the logical channel; and
a sending unit 1502, configured to send the logical channel configuration information to the terminal device, where the logical channel configuration information is used by the terminal device to determine a logical channel for transmitting a to-be-transmitted data packet.

The time duration is a packet delay budget PDB corresponding to a service transmitted on the logical channel.

The time duration is the packet delay budget PDB corresponding to the service transmitted on the logical channel, or the data transmission volume is a maximum data burst volume MDBV within the PDB.

The communications apparatus further includes a receiving unit 1503, configured to receive data, a signal, or the like. The receiving unit 1503 shown by dashed lines in FIG. 19 is optional.

It may be understood that the sending unit 1502 and the receiving unit 1503 may be combined into a transceiver unit, and implement a similar function. Details are not described herein again.

When the communications device in this embodiment is a network device, refer to a device shown in FIG. 20. The device 1600 includes a processor 1601, an application processor, a memory, a user interface, and some other elements (including a device such as a power supply that is not shown). The processing unit may be the processor 1601, and completes a corresponding function. The sending unit and/or the receiving unit may be a wireless transceiver 1603 in the figure, and implement a corresponding function by using an antenna. It may be understood that the elements shown in the figure are merely an example, but are not mandatory elements for implementing this embodiment.

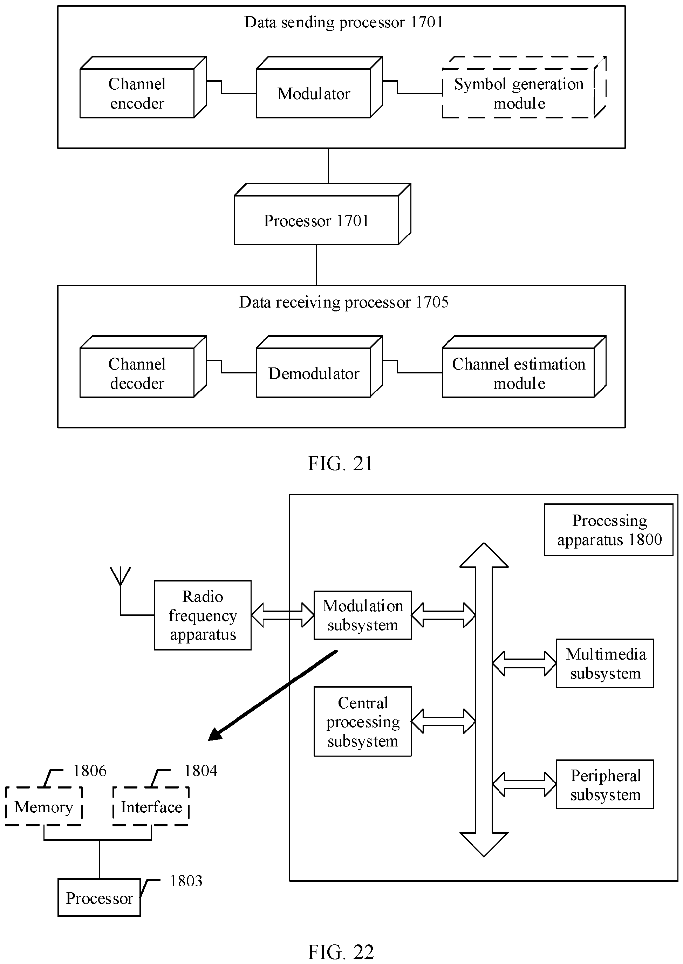

When the communications device in this embodiment is a terminal, refer to a device shown in FIG. 21. In an example, the device 1700 may implement a function similar to that of the processor in FIG. 20. In FIG. 21, the communications device includes a processor 1701, a data sending processor 1703, and a data receiving processor 1705. In FIG. 21, the processing unit may be the processor 1701, and completes a corresponding function. The sending unit may be the data sending processor 1703 in FIG. 21, and the receiving unit may be the data receiving processor 1705 in FIG. 21. Although a channel encoder and a channel decoder are shown in the figure, it may be understood that the modules are merely an example, but do not constitute a limitation on this embodiment.

FIG. 22 shows another form of this embodiment. A processing apparatus 1800 includes modules such as a modulation subsystem, a central processing subsystem, and a peripheral subsystem. The communications device in this embodiment may be used as the modulation subsystem in the processing apparatus 1800. Specifically, the modulation subsystem may include a processor 1803 and an interface 1804. The processor 1803 implements a function of the processing unit, and the interface 1804 implements a function of the sending unit and/or receiving unit. In another variant, the modulation subsystem includes a memory 1806, the processor 1803, and a program that is stored in the memory and that can run on the processor. When executing the program, the processor implements the method in any one of the first embodiment to the fifth embodiment. It should be noted that the memory 1806 may be non-volatile or volatile, and may be located inside the modulation subsystem or in the processing apparatus 1800, provided that the memory 1806 can be connected to the processor 1803.

In another form of this embodiment, a computer-readable storage medium is provided. The computer-readable storage medium stores an instruction, and when the instruction is executed, the steps performed by the network device in the method 200 are performed.

This application provides a communications device. The communications device may perform the method 100 and the steps performed by the terminal device in the embodiments. The communications device may be a terminal, or may be hardware implementing a similar function.

The communications device includes at least one processor. The processor is coupled to a memory. The processor is configured to: read an instruction in the memory, and perform, according to the instruction, the method 100 and the method performed by the terminal device in the embodiments.

This application provides a communications device. The communications device may perform the steps in the method 100 and the steps performed by the network device in the embodiments. The communications device may be a network device, or may be hardware implementing a similar function.

The communications device includes at least one processor. The processor is coupled to a memory. The processor is configured to: read an instruction in the memory, and perform, according to the instruction, the method 100 and the method performed by the network device in the embodiments.

This application provides a communications device. The communications device may perform the method 200 and the steps performed by the terminal device in the embodiments. The communications device may be a terminal, or may be hardware implementing a similar function.

The communications device includes at least one processor. The processor is coupled to a memory. The processor is configured to: read an instruction in the memory, and perform, according to the instruction, the method 200 and the method performed by the terminal device in the embodiments.

This application provides a communications device. The communications device may perform the steps in the method 200 and the steps performed by the network device in the embodiments. The network device may be a network device, or may be hardware implementing a similar function.

The communications device includes at least one processor. The processor is coupled to a memory. The processor is configured to: read an instruction in the memory, and perform, according to the instruction, the method 200 and the method performed by the network device in the embodiments.

It should be noted that the memory in the foregoing embodiments may be integrated into the processor, or may be independent of the processor. This is not limited in this embodiment.

The processor in the foregoing embodiments may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logical device, a discrete gate or transistor logic device, or a discrete hardware component. The processor may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware in the decoding processor and software modules. The software module may be located in a mature storage medium in the art, such as a random access memory (Random Access Memory, RAM), a flash memory, a read-only memory (Read-Only Memory, ROM), a programmable read-only memory, an electrically erasable programmable memory, a register, or the like. The storage medium is located in the memory, and a processor reads an instruction in the memory and completes the steps in the foregoing methods in combination with hardware of the processor.

An embodiment of this application further provides a communications system. The communications system includes the communications device provided in the foregoing embodiments of this application. The communications system can implement any resource allocation method provided in the embodiments of this application. It should be understood that the communications system may further include another communications device.

An embodiment of this application further provides a system chip. The system chip includes a processing unit and a communications unit. The processing unit may be, for example, a processor, and the communications unit may be, for example, an input/output interface, a pin, or a circuit. The processing unit may execute a computer instruction, so that the chip in the terminal performs the resource allocation method in any embodiment of this application.

Optionally, the computer instruction is stored in a storage unit.

Optionally, the storage unit is a storage unit inside the chip, such as a register or a buffer. Alternatively, the storage unit may be a storage unit that is inside a terminal and that is located outside the chip, such as a ROM, another type of static storage device that can store static information and a static instruction, or a RAM. The processor mentioned in any of the foregoing descriptions may be a CPU, a microprocessor, an ASIC, or one or more integrated circuits configured to control execution of a program of the resource allocation method.

This application further provides a computer program product. The computer program product includes an instruction, and when the instruction is executed, a network device and a terminal device are enabled to perform operations corresponding to the foregoing method.

It should be understood that, the foregoing descriptions of the embodiments of this application focus on differences between the embodiments. For same or similar parts that are not mentioned, refer to each other. For brevity, details are not described herein again.

It should be understood that, the term "and/or" and "at least one of A or B" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application. Therefore, the protection scope of this application shall be subject to the protection scope of the claims.

## Claims

1. A resource allocation method, comprising:
receiving (220), by a communications device, logical channel configuration information sent by a network device, wherein the logical channel configuration information comprises a time duration and a volume of data transmitted within the time duration, and the volume of the data is a parameter of a logical channel;
determining (230), by the communications device, a first logical channel based on a first condition, wherein the first condition is: for a logical channel, a sum of a size of a to-be-transmitted data packet of the communications device and a volume of data that is already transmitted within the time duration before a moment at which the to-be-transmitted data packet is transmitted is less than or equal to the volume of the data; and
allocating (240), by the communications device to the first logical channel based on the size of the to-be-transmitted data packet, a resource used for transmitting the to-be-transmitted data packet;
**characterized in that** the method further comprises:
determining (221), by the communications device, a second logical channel set based on a second condition, wherein the second logical channel set comprises at least one logical channel, and the second condition is: for a logical channel, the volume of the data that is already transmitted within the time duration before the moment at which the to-be-transmitted data packet is transmitted is less than or equal to the volume of the data; and
the determining (230), by the communications device, a first logical channel based on a first condition comprises:
determining, by the communications device, the first logical channel from the second logical channel set based on the first condition.

2. The method according to claim 1, wherein
the time duration is a packet delay budget, PDB, corresponding to a service transmitted on the logical channel; or
the volume of the data is a maximum data burst volume MDBV within the PDB.

3. A communications device, comprising:
a receiving unit (1101), configured to receive logical channel configuration information sent by a network device, wherein the logical channel configuration information comprises a time duration and a volume of data transmitted within the time duration, and the volume of the data is a parameter of a logical channel; and
a processing unit (1102), configured to determine a first logical channel based on a first condition, wherein the first condition is: for a logical channel, a sum of a size of a to-be-transmitted data packet of the communications device and a volume of data that is already transmitted within the time duration before a moment at which the to-be-transmitted data packet is transmitted is less than or equal to the volume of the data, wherein
the processing unit is further configured to allocate, to the first logical channel based on the size of the to-be-transmitted data packet, a resource used for transmitting the to-be-transmitted data packet;
**characterized in that**
the processing unit is further configured to determine a second logical channel set based on a second condition, wherein the second logical channel set comprises at least one logical channel, and the second condition is: for a logical channel, the volume of the data that is already transmitted within the time duration before the moment at which the to-be-transmitted data packet is transmitted is less than or equal to the volume of the data; and
determine the first logical channel from the second logical channel set based on the first condition.

4. The communications device according to claim 3, wherein
the time duration is a packet delay budget, PDB, corresponding to a service transmitted on the logical channel; or
the volume of the data is a maximum data burst volume, MDBV, within the PDB.

5. A computer-readable storage medium, storing a computer program, wherein when the program is executed by a processor, the communication method according to any one of claims 1 to 2 is implemented.

6. A communication system, comprising a first communications device according to claim 3, and a second communications device, the second communications device, comprising:
a processing unit (1501), configured to generate logical channel configuration information, wherein the logical channel configuration information comprises a time duration of a logical channel of a terminal device and a volume of data transmitted within the time duration, and the volume of the data is a parameter of the logical channel; and
a sending unit (1502), configured to send the logical channel configuration information to the terminal device, wherein the logical channel configuration information is used by the communications device to determine a logical channel for transmitting a to-be-transmitted data packet.

7. The communications system according to claim 6, wherein
the time duration is a packet delay budget PDB corresponding to a service transmitted on the logical channel; or
the volume of data is a maximum data burst volume, MDBV, within the PDB.

## Patentansprüche

1. Ressourcenzuweisungsverfahren, das umfasst:
Empfangen (220), durch eine Kommunikationsvorrichtung, von Konfigurationsinformationen eines logischen Kanals, die durch eine Netzwerkvorrichtung gesendet werden, wobei die Konfigurationsinformationen des logischen Kanals eine Zeitdauer und ein Datenvolumen, das innerhalb der Zeitdauer übertragen wird, umfassen, und das Volumen der Daten ein Parameter eines logischen Kanals ist;
Bestimmen (230), durch die Kommunikationsvorrichtung, eines ersten logischen Kanals basierend auf einer ersten Bedingung, wobei die erste Bedingung lautet: für einen logischen Kanal, eine Summe einer Größe eines zu übertragenden Datenpakets der Kommunikationsvorrichtung und eines Datenvolumens, das bereits innerhalb der Zeitdauer vor einem Zeitpunkt übertragen wird, zu dem das zu übertragende Datenpaket übertragen wird, kleiner als oder gleich dem Volumen der Daten ist; und
Zuweisen (240), durch die Kommunikationsvorrichtung zu dem ersten logischen Kanal basierend auf der Größe des zu übertragenden Datenpakets, einer Ressource, die zum Übertragen des zu übertragenden Datenpakets verwendet wird;
**dadurch gekennzeichnet, dass** das Verfahren ferner umfasst:
Bestimmen (221), durch die Kommunikationsvorrichtung, eines Satzes eines zweiten logischen Kanals basierend auf einer zweiten Bedingung, wobei der Satz des zweiten logischen Kanals mindestens einen logischen Kanal umfasst, und die zweite Bedingung lautet: für einen logischen Kanal, das Volumen der Daten, das bereits innerhalb der Zeitdauer vor dem Zeitpunkt übertragen wird, zu dem das zu übertragende Datenpaket übertragen wird, kleiner als oder gleich dem Volumen der Daten ist; und
das Bestimmen (230), durch die Kommunikationsvorrichtung, eines ersten logischen Kanals basierend auf einer ersten Bedingung umfasst:
Bestimmen, durch die Kommunikationsvorrichtung, des ersten logischen Kanals aus dem Satz des zweiten logischen Kanals basierend auf der ersten Bedingung.

2. Verfahren nach Anspruch 1, wobei
die Zeitdauer ein Paketverzögerungsbudget, PDB, ist, das einem Dienst, der auf dem logischen Kanal übertragen wird, entspricht; oder
das Volumen der Daten ein maximales Datenburstvolumen MDBV innerhalb des PDB ist.

3. Kommunikationsvorrichtung, die umfasst:
eine Empfangseinheit (1101), die konfiguriert ist, um Konfigurationsinformationen des logischen Kanals zu empfangen, die durch eine Netzwerkvorrichtung gesendet werden, wobei die Konfigurationsinformationen des logischen Kanals eine Zeitdauer und ein Datenvolumen umfassen, das innerhalb der Zeitdauer übertragen wird, und das Volumen der Daten ein Parameter eines logischen Kanals ist; und
eine Verarbeitungseinheit (1102), die konfiguriert ist, um einen ersten logischen Kanal basierend auf einer ersten Bedingung zu bestimmen, wobei die erste Bedingung lautet: für einen logischen Kanal, eine Summe einer Größe eines zu übertragenden Datenpakets der Kommunikationsvorrichtung und eines Datenvolumens, das bereits innerhalb der Zeitdauer vor einem Zeitpunkt übertragen wird, zu dem das zu übertragende Datenpaket übertragen wird, kleiner als oder gleich dem Volumen der Daten ist, wobei
die Verarbeitungseinheit ferner konfiguriert ist, um, zu dem ersten logischen Kanal basierend auf der Größe des zu übertragenden Datenpakets, eine Ressource zuzuweisen, die zum Übertragen des zu übertragenen Datenpakets verwendet wird;
**dadurch gekennzeichnet, dass**
die Verarbeitungseinheit ferner konfiguriert ist, um einen Satz des zweiten logischen Kanals basierend auf einer zweiten Bedingung zu bestimmen, wobei der Satz des zweiten logischen Kanals mindestens einen logischen Kanal umfasst, und die zweite Bedingung lautet: für einen logischen Kanal, das Volumen der Daten, das bereits innerhalb der Zeitdauer vor dem Zeitpunkt übertragen wird, zu dem das zu übertragende Datenpaket übertragen wird, kleiner als oder gleich dem Volumen der Daten ist; und
Bestimmen des ersten logischen Kanals aus dem Satz des zweiten logischen Kanals basierend auf der ersten Bedingung.

4. Kommunikationsvorrichtung nach Anspruch 3, wobei
die Zeitdauer ein Paketverzögerungsbudget, PDB, ist, das einem Dienst, der auf dem logischen Kanal übertragen wird, entspricht; oder
das Volumen der Daten ein maximales Datenburstvolumen, MDBV, innerhalb des PDB ist.

5. Computerlesbares Speicherungsmedium, das ein Computerprogramm speichert, wobei, wenn das Programm durch einen Prozessor ausgeführt wird, das Kommunikationsverfahren nach einem der Ansprüche 1 bis 2 implementiert wird.

6. Kommunikationssystem, das eine erste Kommunikationsvorrichtung nach Anspruch 3 und eine zweite Kommunikationsvorrichtung umfasst, wobei die zweite Kommunikationsvorrichtung umfasst:
eine Verarbeitungseinheit (1501), die konfiguriert ist, um Konfigurationsinformationen des logischen Kanals zu erzeugen, wobei die Konfigurationsinformationen des logischen Kanals eine Zeitdauer eines logischen Kanals eines Endgeräts und ein Datenvolumen umfassen, das innerhalb der Zeitdauer übertragen wird, und das Volumen der Daten ein Parameter des logischen Kanals ist; und
eine Sendeeinheit (1502), die konfiguriert ist, um die Konfigurationsinformationen des logischen Kanals an das Endgerät zu senden, wobei die Konfigurationsinformationen des logischen Kanals durch die Kommunikationsvorrichtung verwendet werden, um einen logischen Kanal zum Übertragen eines zu übertragenden Datenpakets zu bestimmen.

7. Kommunikationssystem nach Anspruch 6, wobei
die Zeitdauer ein Paketverzögerungsbudget PDB ist, das einem Dienst, der auf dem logischen Kanal übertragen wird, entspricht; oder
das Datenvolumen ein maximales Datenburstvolumen, MDBV, innerhalb des PDB ist.

## Revendications

1. Procédé d'attribution de ressources, comprenant :
la réception (220), par un dispositif de communication, d'informations de configuration de canal logique envoyées par un dispositif réseau, dans lequel les informations de configuration de canal logique comprennent une durée et un volume de données transmis dans la durée, et le volume des données est un paramètre d'un canal logique ;
la détermination (230), par le dispositif de communication, d'un premier canal logique sur la base d'une première condition, dans lequel la première condition est : pour un canal logique, une somme d'une taille d'un paquet de données à transmettre du dispositif de communication et d'un volume de données qui est déjà transmis dans la durée de temps avant l'instant auquel le paquet de données à transmettre est transmis est inférieure ou égale au volume des données ; et
l'attribution (240), par le dispositif de communication au premier canal logique sur la base de la taille du paquet de données à transmettre, d'une ressource utilisée pour transmettre le paquet de données à transmettre,
**caractérisé en ce que** le procédé comprend en outre :
la détermination (221), par le dispositif de communication, d'un second ensemble de canaux logiques sur la base d'une seconde condition, dans lequel le second ensemble de canaux logiques comprend au moins un canal logique, et la seconde condition est :
pour un canal logique, le volume des données qui est déjà transmis dans la durée de temps avant l'instant auquel le paquet de données à transmettre est transmis est inférieur ou égal au volume des données ; et
la détermination (230), par le dispositif de communication, d'un premier canal logique sur la base d'une première condition comprend :
la détermination, par le dispositif de communication, du premier canal logique à partir du second ensemble de canaux logiques sur la base de la première condition.

2. Procédé selon la revendication 1, dans lequel
la durée est un budget de retard de paquet, PDB, correspondant à un service transmis sur le canal logique ; ou
le volume des données est un volume de rafale de données maximal MDBV au sein du PDB.

3. Dispositif de communication, comprenant :
une unité de réception (1101), configurée pour recevoir des informations de configuration de canal logique envoyées par un dispositif de réseau, dans lequel les informations de configuration de canal logique comprennent une durée et un volume de données transmis dans la durée, et le volume des données est un paramètre d'un canal logique ; et
une unité de traitement (1102), configurée pour déterminer un premier canal logique sur la base d'une première condition, dans lequel la première condition est : pour un canal logique, une somme d'une taille d'un paquet de données à transmettre du dispositif de communication et d'un volume de données qui est déjà transmis dans la durée avant l'instant auquel le paquet de données à transmettre est transmis est inférieure ou égale au volume des données, dans lequel
l'unité de traitement est en outre configurée pour attribuer, au premier canal logique sur la base de la taille du paquet de données à transmettre, une ressource utilisée pour transmettre le paquet de données à transmettre ;
**caractérisé en ce que**
l'unité de traitement est en outre configurée pour déterminer un second ensemble de canaux logiques sur la base d'une seconde condition, dans lequel le second ensemble de canaux logiques comprend au moins un canal logique, et la seconde condition est :
pour un canal logique, le volume des données qui est déjà transmis dans la durée avant l'instant auquel le paquet de données à transmettre est transmis est inférieur ou égal au volume des données ; et
la détermination du premier canal logique à partir du second ensemble de canaux logiques sur la base de la première condition.

4. Dispositif de communication selon la revendication 3, dans lequel
la durée est un budget de retard de paquet, PDB, correspondant à un service transmis sur le canal logique ; ou
le volume des données est un volume maximal de rafale de données, MDBV, au sein du PDB.

5. Support de stockage lisible par ordinateur stockant un programme informatique, dans lequel lorsque le programme est exécuté par un processeur, le procédé de communication selon l'une quelconque des revendications 1 à 2 est mis en oeuvre.

6. Système de communication, comprenant un premier dispositif de communication selon la revendication 3, et un second dispositif de communication, le second dispositif de communication comprenant :
une unité de traitement (1501), configurée pour générer des informations de configuration de canal logique, dans lequel les informations de configuration de canal logique comprennent une durée d'un canal logique d'un dispositif terminal et un volume de données transmis dans la durée, et le volume des données est un paramètre du canal logique ; et
une unité d'envoi (1502), configurée pour envoyer les informations de configuration de canal logique au dispositif terminal, dans lequel les informations de configuration de canal logique sont utilisées par le dispositif de communication pour déterminer un canal logique afin de transmettre un paquet de données à transmettre.

7. Système de communication selon la revendication 6, dans lequel
la durée est un budget de retard de paquet PDB correspondant à un service transmis sur le canal logique ; ou
le volume de données est un volume maximal de rafale de données, MDBV, au sein du PDB.
